# EUROPEAN PATENT SPECIFICATION

(11) **EP 3 310 087 B1**
(45) Date of publication and mention of the grant of the patent: **02.12.2020**
(21) Application number: 16807256.9
(22) Date of filing: 17.05.2016
(51) Int. Cl.: H04W 16/14, H04W 72/04

(54) **CONTROL DEVICE, METHOD, AND COMPUTER PROGRAM**
STEUERUNGSVORRICHTUNG, VERFAHREN UND COMPUTERPROGRAMM
DISPOSITIF DE COMMANDE, PROCÉDÉ, ET PROGRAMME D'ORDINATEUR

(30) Priority: 11.06.2015 JP 2015118114
(43) Date of publication of application: 18.04.2018
(73) Proprietor: Sony Corporation, Tokyo 108-0075 (JP)
(72) Inventor: IDE, Naoki, Tokyo 108-0075 (JP); USUI, Takashi, Tokyo 108-0075 (JP); TSUDA, Shinichiro, Weybridge Surrey KT13 0XW (GB)
(74) Representative: Witte, Weller & Partner Patentanwälte mbB
(86) International application number: PCT/JP2016/064633
(87) International publication number: WO 2016/199549

(56) References cited:
- EP-A1- 2 770 789
- JP-A- 2011 521 491
- US-A1- 2011 194 503
- US-A1- 2013 078 924
- US-A1- 2014 036 791
- "IEEE Recommended Practice for Information Technology - Telecommunications and information exchange between systems Wireless Regional Area Networks (WRAN) - Specific requirements - Part 22.2: Installation and Deployment of IEEE 802.22 Systems;IEEE Std 802.22.2-2012", IEEE STANDARD, IEEE, PISCATAWAY, NJ, USA, 28 September 2012 (2012-09-28), pages 1-44, XP068045690, ISBN: 978-0-7381-7306-1
- LU , WEI DANG ET AL.: 'Cooperative OFDM Relaying for Opportunistic Spectrum Sharing: Protocol Design and Resource Allocation' IEEE TRANSACTIONS ON WIRELESS COMMUNICATIONS vol. 11, no. 6, June 2012, pages 2126 - 2135, XP011447728

## Description

### Technical Field

The present disclosure relates to a control device, a method, and a computer program.

### Background Art

In these days, with the evolution of mobile phones, the information exchanged by wireless communication has changed from information of telephone call to multimedia information of a larger size, such as music, image, and moving image. As a result of exchange of the information of the larger size as described above, the demand on the wireless communication expands significantly, and along with this, the resource supply of the wireless communication is tight.

On the other hand, the radio wave from a television tower, a radio station, or the like is not always utilized necessarily. Also, the radio wave is unable to be utilized at all sites. Thus, there is a study of a measure for utilizing a vacant time and a vacant region in the tight wireless communication, if there is a vacant time and a vacant region in the television station, the radio station, or a special communication band to which some sort of approval is given. White space utilization is a technology that utilizes this vacant time, the vacant region, and the vacancy band (refer to below Non-Patent Literature 1). In addition, the technology relevant to the data transmission through the television white space is also proposed. For example, below Patent Literature 1 discloses a technology relevant to a procedure to acquire information of a frequency channel to be used, from among the white space, by spectrum sensing.

### Citation List

### Patent Literature

Patent Literature 1: JP 2012-509608T

### Non-Patent Literature

Non-Patent Literature 1: "IEEE 802.22 WG on WRANs", [online], [searched on May 1, 2015], Internet <URL: http://www.ieee802.org/22/>

EP 2770789 A1 discloses a method to optimise network spectrum utilisation comprising, a wireless communications network with multiple nodes, including base stations and user terminals, utilizing a radio frequency spectrum, at least two different classes of access priorities for radio frequency spectrum resources, at least two different priority classes of user terminal, which correspond to the access priorities; comprising the steps: - determining the spectrum resources at a specific location by determining the properties of the communication nodes and the utilization of bandwidth by all priority classes of user terminals in a defined area; - predicting future geo-located contextual network needs for users terminals of all priority classes in the defined area, based on historical profiles; - optimizing of the use of the radiofrequency spectrum based on the priority classes and the future geo-located contextual network needs of the user terminals in the defined area.

US 2011/194503 A1 discloses that spectrum asset class determination is dynamically assessed so that a radio device may use a more preferred one of licensed spectrum or unlicensed spectrum for the specific wireless communications application of the radio device. Licensed spectrum, in addition to unlicensed spectrum, may be made available to preferred radio devices by validating that the radio system has an equipment ID and a secondary ID that authorizes the use of the licensed spectrum by the radio system.

### Disclosure of Invention

### Technical Problem

When the vacant time and the vacant region of the broadcast radio wave is actually utilized in the wireless communication, it is concerned that the broadcast radio wave is interfered by the wireless radio wave. If the wireless system is utilized with a large margin to prevent the wireless radio wave from interfering the broadcast radio wave, the wireless system is unable to perform sufficient communication.

Thus, the present disclosure proposes a new and improved control device, a method and a computer program, which can perform sufficient wireless communication that uses a white space, without interfering the system that uses a special communication band like broadcast.

### Solution to Problem

According to the present disclosure, there are provided a control device, a corresponding method and a computer program as defined in the claims.

### Advantageous Effects of Invention

As described above, the present disclosure can be provided a new and improved control device, a method and a computer program, which can perform sufficient wireless communication that uses the white space, without interfering a system that uses a special communication band like broadcast.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating a configuration example of a broadcast system according to an embodiment of the present disclosure.
[FIG. 2] FIG. 2 is an explanatory diagram that represents, with a graph, an example of a temporal change of a use situation of a channel (frequency band) for broadcast.
[FIG. 3] FIG. 3 is an explanatory diagram illustrating a system configuration example provided with a wireless communication system that uses a white space.
[FIG. 4] FIG. 4 is an explanatory diagram illustrating a system configuration example.
[FIG. 5] FIG. 5 is an explanatory diagram illustrating a system configuration example.
[FIG. 6] FIG. 6 is an explanatory diagram illustrating a system configuration example.
[FIG. 7] FIG. 7 is an explanatory diagram illustrating a functional configuration example of a WSD 100 according to an embodiment of the present disclosure.
[FIG. 8] FIG. 8 is a flow diagram illustrating an operation example of a WSD 100 according to an embodiment of the present disclosure.
[FIG. 9] FIG. 9 is an explanatory diagram illustrating a configuration example of a communication resource allocation user interface 160.
[FIG. 10] FIG. 10 is an explanatory diagram illustrating a variant example of a WSD 100 according to an embodiment of the present disclosure.
[FIG. 11] FIG. 11 is an explanatory diagram illustrating a variant example of a WSD 100 according to an embodiment of the present disclosure.
[FIG. 12] FIG. 12 is an explanatory diagram illustrating an operation example of a WSD 100 according to an embodiment of the present disclosure.
[FIG. 13] FIG. 13 is a diagram for describing a sequence of advertisement revenue that uses a WSD 100 according to the present embodiment.
[FIG. 14] FIG. 14 is an explanatory diagram illustrating an example of a user interface.
[FIG. 15] FIG. 15 is an explanatory diagram illustrating an example of a user interface.
[FIG. 16] FIG. 16 is an explanatory diagram illustrating an example of a user interface.
[FIG. 17] FIG. 17 is an explanatory diagram illustrating an example of a user interface.
[FIG. 18] FIG. 18 is an explanatory diagram illustrating an example of a user interface.
[FIG. 19] FIG. 19 is an explanatory diagram illustrating an example of a user interface.
[FIG. 20] FIG. 20 is an explanatory diagram illustrating an example of a user interface.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be made in the following order.
1. Embodiment of Present Disclosure
1.1. Background
1.2. Configuration Example
1.3. Operation Example
1.4. User Interface Configuration Example
1.5. Variant Example
1.6. User Interface Example
2. Conclusion

### <1. Embodiment of Present Disclosure>

### [1.1. Background]

Before an embodiment of the present disclosure is described in detail, the background of the embodiment of the present disclosure will be described.

As described above, in these days, with the evolution of mobile phones, the information exchanged by wireless communication has changed from information of telephone call to multimedia information of a larger size, such as music, image, and moving image. As a result of exchange of the information of the larger size as described above, the demand on the wireless communication expands significantly, and along with this, the resource supply of the wireless communication is tight.

On the other hand, the radio wave from a television tower, a radio station, or the like is not always utilized necessarily. Also, the radio wave is unable to be utilized at all sites. Thus, there is a study of a measure for utilizing a vacant time and a vacant region in the tight wireless communication, if there is a vacant time and a vacant region in the television station, the radio station, or a special communication band to which some sort of approval is given. White space utilization is a technology that utilizes this vacant time, the vacant region, and the vacancy band

Below description will describe a case in which a service that utilizes a frequency band whose utilization authorization is given to a specific business operator is digital television broadcast (DTV). Note that the service that utilizes the frequency band whose utilization authorization is given to the specific business operator can include wireless microphone, radar (military, ship-based, weather, etc.), fixed-satellite service, telemetry, earth exploration satellite, etc., in addition to the digital television broadcast.

However, when a vacant time and a vacant region of the broadcast radio wave are utilized in the wireless communication, it is concerned that the broadcast radio wave is interfered by the wireless radio wave, and that the wireless system communicates in a space that is not a complete white space and thereby the broadcast system becomes unable to be utilized. Thus, in the past, there has been a study of a measure to prevent the wireless system from intruding into the broadcast area, and to reduce the transmission electric power of the wireless radio wave even if the broadcast area is intruded.

Among these, the method to prevent the wireless system from intruding into the broadcast area is, in other words, to utilize the white space only in a region that the broadcast radio wave does not reach completely. However, the area of tight wireless communication is a region that has a high population density and reached by the broadcast radio wave, in many cases. Hence, this method is not very effective.

Thus, there has been the other method, that is, the method to reduce the transmission electric power of the wireless radio wave when the wireless system intrudes into the broadcast area. This method operates the wireless system so as not to interfere the broadcast radio wave, by sensing the intensity of the broadcast radio wave and the degree of interference from the wireless system by using some sort of sensing system. For example, the above-described Patent Literature 1 discloses a technology relevant to a procedure to acquire information of a frequency channel to be used, from among the white space, by spectrum sensing.

However, when the vacant time and the vacant region of the broadcast radio wave is actually utilized in the wireless communication, it is concerned that the broadcast radio wave is actually interfered by the wireless radio wave. If the wireless system is utilized with a large margin to prevent the wireless radio wave from interfering the broadcast radio wave, the wireless system is unable to perform sufficient communication.

Thus, in consideration of the above background, the discloser of the present application has performed an intense study of a technology that can sufficiently utilize another communication service that uses a frequency band like wireless communication, without interfering a communication service that uses the predetermined frequency band like a broadcast system. As a result, the discloser of the present application has led up to devising a technology that can sufficiently utilize another communication service that uses a frequency band, without interfering the communication service that uses the predetermined frequency band, by allocating the communication resources of a predetermined frequency band appropriately, as described below.

In the above, the background of the embodiment of the present disclosure has been described.

### [1.2. Configuration Example]

Next, a configuration example of an embodiment of the present disclosure will be described.

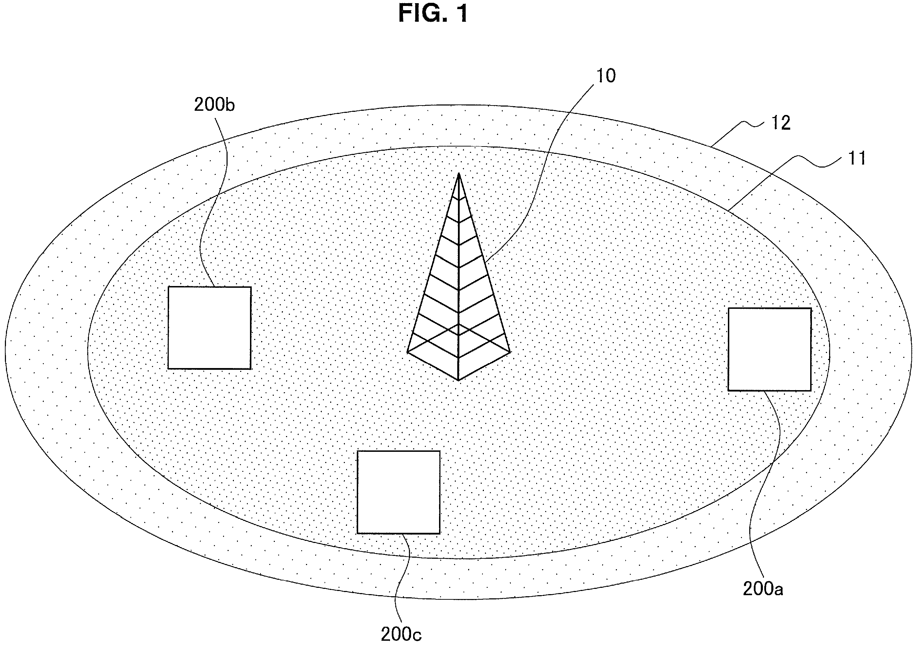

First, a configuration example of a system to which an embodiment of the present disclosure is applied will be described. FIG. 1 is an explanatory diagram illustrating the configuration example of the broadcast system according to the embodiment of the present disclosure.

In the broadcast system illustrated in FIG. 1, a radio wave tower 10 of a broadcast station transmits the digital television (DTV) broadcast to the receiver (DTV receiver), with radio waves of a frequency band assigned to the broadcast station.

FIG. 1 illustrates a coverage area 11 indicating an area reached by the radio wave transmitted by the radio wave tower 10 of the broadcast station, a white space 20 indicating an area not reached by the radio wave transmitted by the radio wave tower 10 of the broadcast station, and a difficult viewing area 12 positioned at a boundary portion between the coverage area 11 and the white space 20. The coverage area 11 and the difficult viewing area 12 are schematically illustrated, and the coverage area 11 and the difficult viewing area 12 can change due to the influence of the terrain and the directional characteristics of the radio wave transmitted from the radio wave tower 10. Also, FIG. 1 illustrates a situation in which three DTV receivers 200a, 200b, 200c that receive DTV broadcast exist in the coverage area 11.

The radio wave that the broadcast station transmits from the radio wave tower 10 has a frequency band that only the approved broadcast station is prioritized to use. However, actually, there is an unused region, because the radio wave does not reach, is not broadcasted, and is not used. Thus, in this region, there is a study of performing the wireless communication by using the frequency band of the broadcast radio wave.

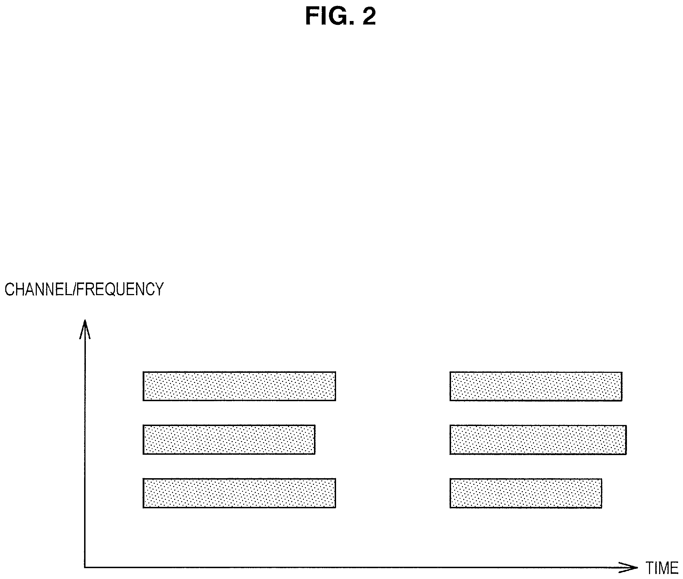

FIG. 2 is an explanatory diagram that represents, with a graph, an example of a temporal change of a use situation of a channel (frequency band) for broadcast. As illustrated in FIG. 2, actual broadcast is not used, depending on time slot, in some cases. For example, in a time slot during which the broadcast has ended, such as midnight, a frequency band for this broadcast is not used, in some cases. Further, as illustrated in FIG. 2, there is an unused frequency band between a channel and a channel. Thus, the wireless communication system that uses the white space performs the wireless communication by utilizing a time slot during which the broadcast is not performed and a frequency band that is not used for the broadcast in the first place, as illustrated in FIG. 2.

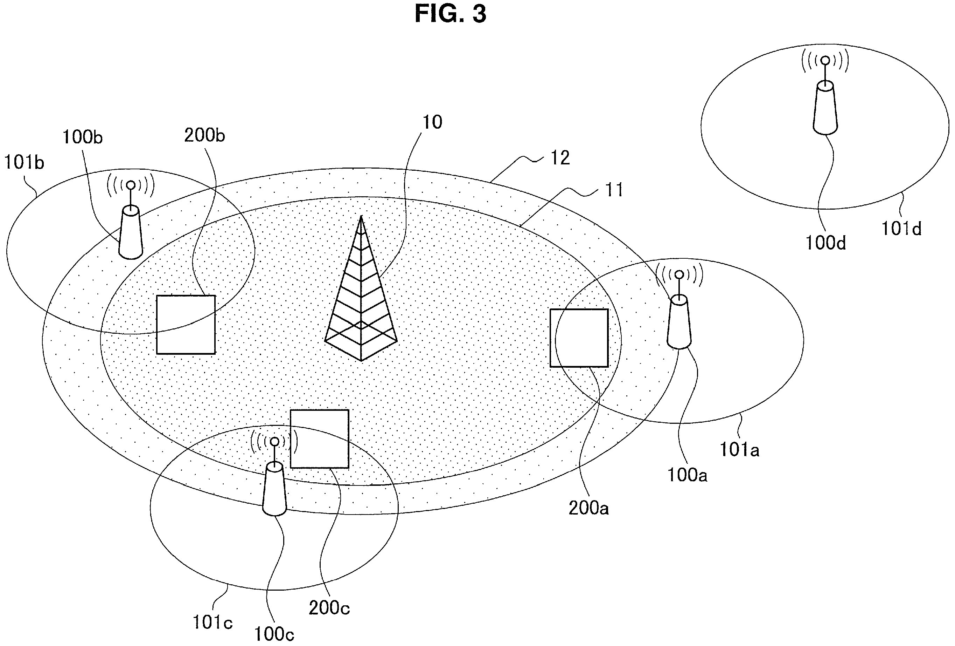

FIG. 3 is an explanatory diagram illustrating a system configuration example in which a wireless communication system that uses the white space is provided in the broadcast system illustrated in FIG. 1. FIG. 3 illustrates white space devices (hereinafter "WSD") 100a, 100b, 100c, 100d that perform the wireless communication that uses the white space in the frequency band used by the broadcast station. Also, FIG. 3 also illustrates coverage areas 101a, 101b, 101c, 101d of the respective WSDs 100a, 100b, 100c, 100d. In the below description, the WSDs are collectively referred to as WSD 100 simply, and the coverage areas of the WSD 100 are referred to as coverage area 101 simply, in some cases.

In the case of the system configuration illustrated in FIG. 3, the WSD 100b positioned in the white space 20 is far away from the radio wave tower 10, and the radio wave transmitted by the WSD 100b, which uses the same frequency band as the radio wave transmitted by the radio wave tower 10, does not have an influence on the reception of the DTV broadcast in the DTV receivers 200a, 200b, 200c inside the coverage area 11. However, it is highly possible that the radio waves that use the same frequency band as the radio wave transmitted by the radio wave tower 10, which are transmitted by the WSDs 100a, 100b, 100c positioned near the DTV receivers 200a, 200b, 200c, have an influence on the reception of the DTV broadcast in the DTV receivers 200a, 200b, 200c.

In order to prevent the radiated radio wave from becoming the interference radio wave for the DTV receivers 200a, 200b, 200c, the WSD 100 is necessary to be located at the difficult viewing area 12 or the like for example, and the intensity of and the transmission radio wave must be set significantly small. However, if the intensity of the transmission radio wave is set too small, the WSD 100 is unable to exchange information sufficiently with the wireless terminal.

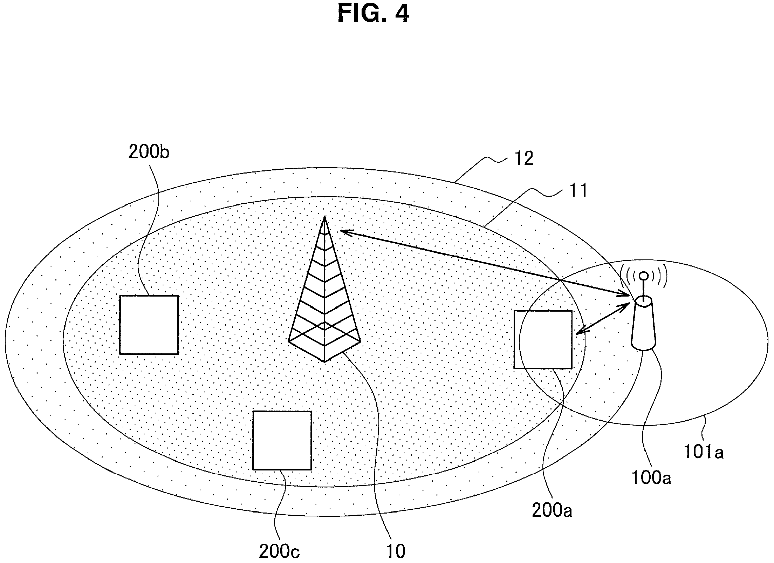

FIG. 4 is an explanatory diagram illustrating a system configuration example for sufficiently utilizing another communication service that secondarily uses a frequency band like the wireless communication, without interfering the broadcast service.

In the system configuration example illustrated in FIG. 4, the WSD 100a receives, by itself, the content of the digital television broadcast transmitted from the radio wave tower 10, and transmits the content of the digital television broadcast toward the DTV receiver 200a. The WSD 100a may perform the transmission toward the DTV receiver 200a without wire or with wire. As described above, the WSD 100a receives by itself the content of the digital television broadcast transmitted from the radio wave tower 10, and transmits the content of the received digital television broadcast toward the DTV receiver 200a, and thereby there is no influence on the reception of the DTV broadcast in the DTV receiver 200a.

However, in order to prevent the interference of the broadcast service by the system configuration example illustrated in FIG. 4, the WSD 100a must be at a position at which the content of the digital television broadcast transmitted from the radio wave tower 10 can be received directly. Furthermore, the WSD 100a itself radiates the radio wave that can interfere the DTV receiver 200a, and is necessary to include a large antenna or the like to receive the content of the digital television broadcast transmitted from the radio wave tower 10. Thus, another method is conceived.

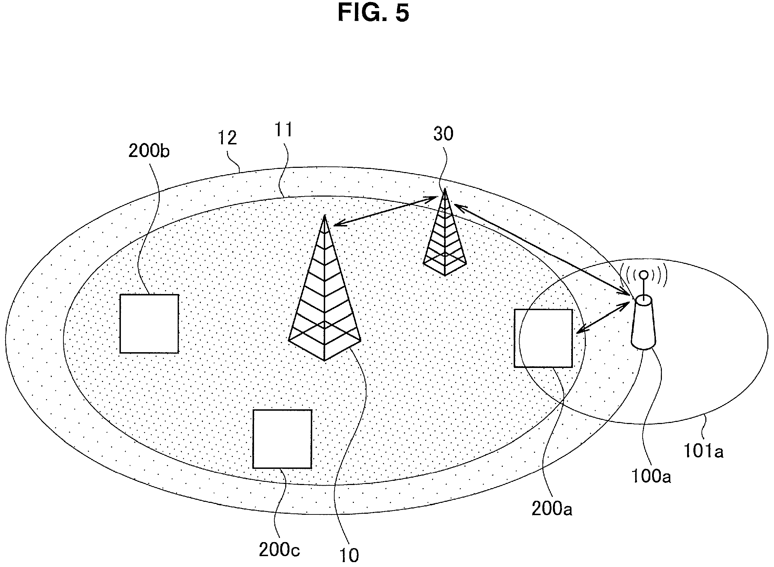

FIG. 5 is an explanatory diagram illustrating a system configuration example for sufficiently utilizing another communication service that secondarily uses a frequency band like the wireless communication, without interfering the broadcast service.

In the system configuration example illustrated in FIG. 5, the WSD 100a does not receive, by itself, the content of the digital television broadcast transmitted from the radio wave tower 10, but receives the content of the digital television broadcast from a relay station 30 of the broadcast provided at a site that is different from the radio wave tower 10, and transmits the information toward the DTV receiver 200a. The WSD 100a may perform the transmission toward the DTV receiver 200a without wire or with wire. As described above, the WSD 100a receives the content of the digital television broadcast transmitted from the radio wave tower 10 from the relay station 30, and transmits the content of the received digital television broadcast toward the DTV receiver 200a, and thereby there is no influence on the reception of the DTV broadcast in the DTV receiver 200a.

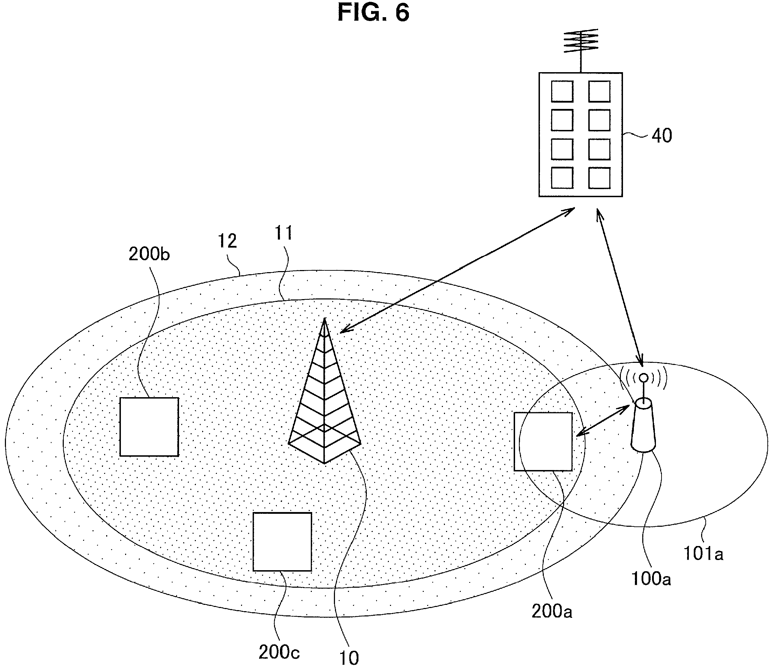

FIG. 6 is an explanatory diagram illustrating a system configuration example for sufficiently utilizing another communication service that secondarily uses a frequency band like the wireless communication, without interfering the broadcast service.

In the system configuration example illustrated in FIG. 6, the WSD 100a does not receive, by itself, the content of the digital television broadcast transmitted from the radio wave tower 10, but receives the content of the digital television broadcast from a broadcast station 40 that transmits the content of the digital television broadcast at a predetermined frequency from the radio wave tower 10, and transmits the content of the received digital television broadcast toward the DTV receiver 200a. The WSD 100a may perform the transmission toward the DTV receiver 200a without wire or with wire. As described above, the WSD 100a receives the content of the digital television broadcast transmitted from the radio wave tower 10 from the broadcast station 40, and transmits the content of the received digital television broadcast toward the DTV receiver 200a, and thereby there is no influence on the reception of the DTV broadcast in the DTV receiver 200a.

The WSD 100 acquires the content of the digital television broadcast transmitted at a predetermined frequency from the radio wave tower 10 by some sort of method, and appropriately allocates the communication resources (the frequency band and the transmission time) as described later, when re-delivering the content of the received digital television broadcast. The WSD 100 enables sufficient utilization of another communication service that uses a frequency band, without interfering the communication service that uses the predetermined frequency band, by allocating the communication resources appropriately.

In the above, the configuration example of the system to which the embodiment of the present disclosure is applied has been described. Next, a functional configuration example of the WSD 100 according to the embodiment of the present disclosure will be described.

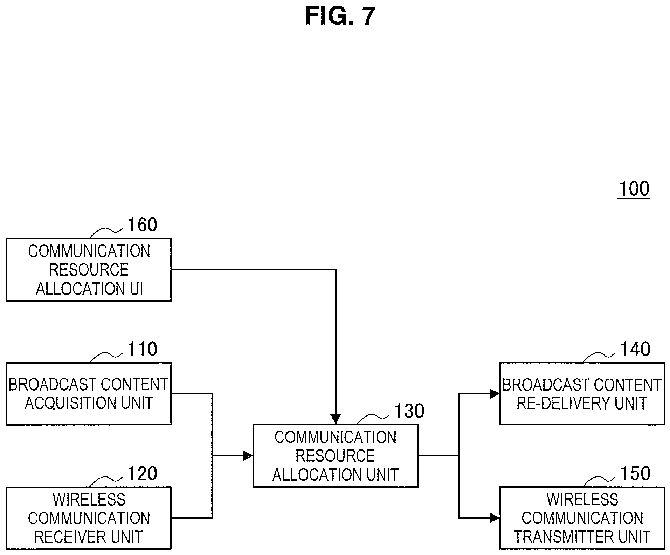

FIG. 7 is an explanatory diagram illustrating a functional configuration example of the WSD 100 according to the embodiment of the present disclosure. In the following, the functional configuration example of the WSD 100 according to the embodiment of the present disclosure will be described by using FIG. 7.

As illustrated in FIG. 7, the WSD 100 according to the embodiment of the present disclosure includes a broadcast content acquisition unit 110, a wireless communication receiver unit 120, a communication resource allocation unit 130, a broadcast content re-delivery unit 140, and a wireless communication transmitter unit 150.

The broadcast content acquisition unit 110 acquires the content of the digital television broadcast transmitted in a predetermined frequency band from the radio wave tower 10. The broadcast content acquisition unit 110 may acquire the content of the digital television broadcast without wire or with wire. Upon acquiring the content of the digital television broadcast, the broadcast content acquisition unit 110 sends the acquired content to the communication resource allocation unit 130.

The wireless communication receiver unit 120 receives the radio wave transmitted in a predetermined frequency band from another device such as a base station and a terminal device for example, and acquires the information carried by the radio wave. With regard to the wireless communication receiver unit 120, the frequency band of the radio wave received by the wireless communication receiver unit 120 may be the same as and may be different from the frequency band of the digital television broadcast which is utilized when the content acquired by the broadcast content acquisition unit 110 is transmitted from the radio wave tower 10. The wireless communication receiver unit 120 receives the radio wave, and sends the acquired information to the communication resource allocation unit 130, upon acquiring the information carried by the radio wave.

The communication resource allocation unit 130 is an example of the control unit of the present disclosure, and allocates the communication resources to the broadcast and the wireless, on the basis of the current broadcast and the use situation of the wireless communication. The communication resource allocation unit 130 may allocate the frequency band, as the communication resource, to the broadcast and the wireless, and may allocate a usable time slot in the same frequency band to the broadcast and the wireless. Also, the communication resource allocation unit 130 may allocate the communication resources to the broadcast and the wireless, for each frequency band.

The communication resource allocation unit 130 allocates the communication resources to the broadcast and the wireless, on the basis of an instruction from the communication resource allocation user interface (User Interface) 160 intended to be manipulated by the operator of the WSD 100 that manipulates the WSD 100. When the communication resource allocation unit 130 allocates the communication resources to the broadcast and the wireless, the broadcast content re-delivery unit 140 re-delivers the content of the digital television broadcast on the basis of the allocated communication resources, and the wireless communication transmitter unit 150 performs the wireless communication.

The communication resource allocation unit 130 may allocate the communication resources to the broadcast and the wireless, in accordance with the WSD 100 and current or future demand and supply of the digital television broadcast. The communication resource allocation unit 130 may allocate the communication resources to the broadcast and the wireless, in accordance with the WSD 100 and current or future demand and supply of the digital television broadcast. When allocating the communication resources to the broadcast and the wireless in accordance with the current demand and the future supply, the communication resource allocation unit 130 may use the information of the prediction of the future demand and supply.

The broadcast content re-delivery unit 140 re-delivers the content of the digital television broadcast acquired by the broadcast content acquisition unit 110, by using the communication resources for the broadcast allocated by the communication resource allocation unit 130. The wireless communication transmitter unit 150 performs wireless transmission of information by using the communication resources for the wireless communication allocated by the communication resource allocation unit 130.

The WSD 100 according to the embodiment of the present disclosure includes the configuration illustrated in FIG. 7, to appropriately allocate the communication resources to the broadcast and the wireless. The WSD 100 according to the embodiment of the present disclosure appropriately allocates the communication resources to the broadcast and the wireless, and thereby enables sufficient utilization of another communication service that uses a predetermined frequency band, without interfering the communication service that uses the predetermined frequency band.

It is necessary to appropriately switch the broadcast and the wireless communication, in order to appropriately operate the WSD 100 according to the embodiment of the present disclosure. However, it is concerned that the wireless communication interferes the broadcast that uses the predetermined frequency band, only by allowing the broadcast and the wireless communication to coexist. Thus, the WSD 100 according to the embodiment of the present disclosure needs to appropriately switch between the broadcast and the wireless communication, in accordance with a current situation of the broadcast and the wireless communication.

It is conceived that the current situation of the broadcast and the wireless communication includes whether or not the WSD 100 is in the coverage area 11 of the radio wave tower 10, whether or not the WSD 100 is in the coverage area 11 of the radio wave tower 10 and is broadcasting, whether the WSD 100 is in the coverage area 11 of the radio wave tower 10 and is broadcasting from the radio wave tower 10 and receives a broadcast request from a viewer of the broadcast, and whether the WSD 100 is out of the coverage area 11 of the radio wave tower 10 and is broadcasting from the radio wave tower 10 and receives a broadcast request from a viewer of the broadcast.

The WSD 100 decides whether to perform the wireless communication only or to perform the re-delivery of the content of the digital television broadcast, in accordance with the current situation of the broadcast and the wireless communication. Also, the WSD 100 changes the method of the re-delivery, in accordance with the target to whom the content of the digital television broadcast is re-delivered is a user of the difficult viewing area created by itself or a user of the area that the radio wave does not reach in the first place. Specifically, the content is transmitted without charge if the WSD 100 re-delivers the content to the user of the difficult viewing area created by itself, and is transmitted after getting paid from the broadcast station or the viewer if the WSD 100 re-delivers the content to play the role of a repeater to the area that the radio wave does not reach.

The WSD 100 may consider whether or not the user of the transmission target has the right to view the content, when re-delivering the content of the digital television broadcast. If the user of the transmission target has the right to view the content, the WSD 100 transmits the content toward the user, but without the right, the WSD 100 does not transmit the content toward the user, or waits for the user to get the right to transmit the content.

The operation example of the WSD 100 will be described in consideration of the above content.

### [1.3. Operation Example]

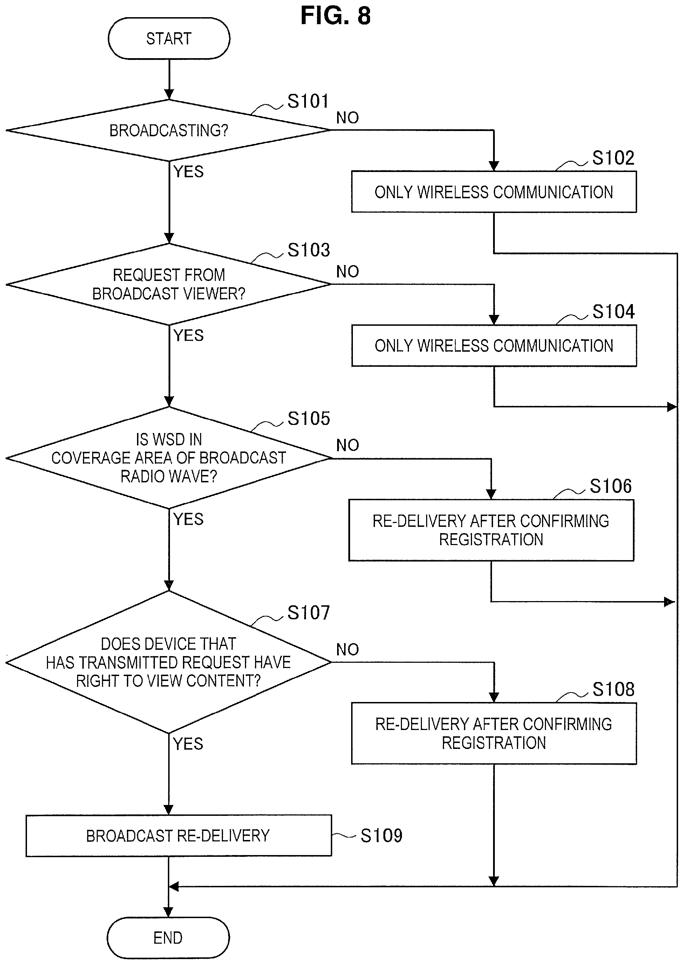

FIG. 8 is a flow diagram illustrating an operation example of the WSD 100 according to the embodiment of the present disclosure. FIG. 8 illustrates an operation example of the WSD 100, when deciding whether to perform the wireless communication only or to perform the re-delivery of the content of the digital television broadcast. In the following, an operation example of the WSD 100 according to the embodiment of the present disclosure will be described by using FIG. 8. Note that the communication resource allocation unit 130 executes a series of operation illustrated in FIG. 8, for example.

The WSD 100 first determines whether or not the digital television broadcast is being broadcasted in a predetermined frequency band from the radio wave tower 10 (step S101). The WSD 100 may determine whether or not the digital television broadcast is being broadcasted in a predetermined frequency band from the radio wave tower 10, on the basis of whether the signal can be received in the frequency band, or whether or not the reception level of the signal is smaller than a predetermined threshold value even when the signal is received.

If the digital television broadcast is not being broadcasted in a predetermined frequency band (step S101, No), the WSD 100 decides to use the frequency band for the wireless communication only (step S102). On the other hand, if the digital television broadcast is being broadcasted in a predetermined frequency band (step S101, Yes), the WSD 100 determines whether or not there is a request for reception of the broadcast from the viewer of the digital television broadcast (step S103).

If the digital television broadcast is being broadcasted in a predetermined frequency band but there is no request of reception of the broadcast from the viewer of the digital television broadcast (step S103, No), the WSD 100 decides that the frequency band be used in the wireless communication only (step S104). On the other hand, if the digital television broadcast is being broadcasted in a predetermined frequency band and there is a request of reception of the broadcast from the DTV receiver 200 used in the viewing by the viewer of the digital television broadcast (step S103, Yes), the WSD 100 determines whether the WSD 100 is in the coverage area 11 of the radio wave tower 10 at the present moment (step S105).

If the WSD 100 is not in the coverage area 11 of the radio wave tower 10 (step S105, No), the WSD 100 views the digital television broadcast broadcasted from the radio wave tower 10, and confirms the registration for obtaining the right to deliver, and then re-delivers the content of the digital television broadcast (step S106). On the other hand, if the WSD 100 is in the coverage area 11 of the radio wave tower 10 (step S105, Yes), the WSD 100 determines whether or not the DTV receiver 200 that has transmitted the request has the right to view the digital television broadcast broadcasted from the radio wave tower 10 (step S107).

If the DTV receiver 200 that has transmitted the request does not have the right to view the digital television broadcast broadcasted from the radio wave tower 10 (step S107, No), the WSD 100 confirms that the DTV receiver 200 views the digital television broadcast broadcasted from the radio wave tower 10 and performs the registration for obtaining the right to deliver, and then re-delivers the content of the digital television broadcast (step S108). On the other hand, if the DTV receiver 200 that has transmitted the request has the right to view the digital television broadcast broadcasted from the radio wave tower 10 (step S107, Yes), the WSD 100 re-delivers the content of the digital television broadcast (step S109).

Note that the WSD 100 may determine whether or not the DTV receiver 200 that has transmitted the request has the right to view the digital television broadcast broadcasted from the radio wave tower 10, on the basis of whether or not the DTV receiver 200 is a moving object.

### [1.4. User Interface Configuration Example]

Next, a user interface used when having the operator of the WSD 100 perform optimal allocation of the communication resources is studied. In the present embodiment, it is assumed that a comparatively smaller scale business operator than the broadcast station or the like handles the WSD 100. This business operator decides an allocation plan of the communication resources, on the basis of an example of the communication resource allocation plan described later or the like, and performs the operation relevant to the actual allocation of the communication resources.

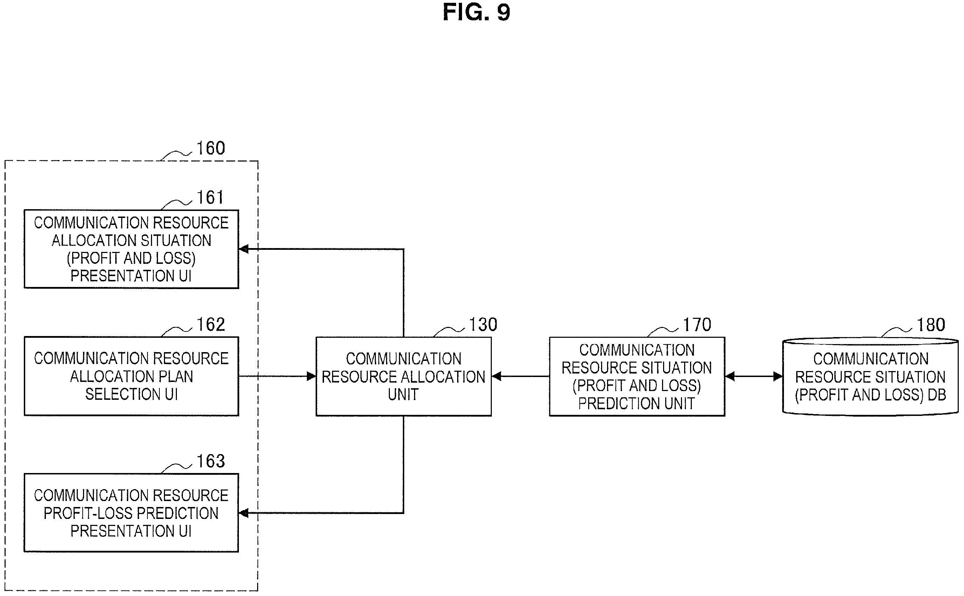

FIG. 9 is an explanatory diagram illustrating a configuration example of the communication resource allocation user interface 160 of the WSD 100, which is used when having the operator perform the optimal allocation of the communication resources.

As illustrated in FIG. 9, the communication resource allocation user interface 160 includes a communication resource allocation situation presentation user interface 161, a communication resource allocation plan selection user interface 162, and a communication resource profit-loss prediction presentation user interface 163.

The communication resource allocation situation presentation user interface 161 is a user interface for presenting the profit and loss when the communication resources are allocated to the broadcast and the wireless communication. The WSD 100 can present, to the operator, how the communication resources is allocated to generate the profit effectively, by presenting, to the operator, the profit and loss generated when the communication resources are allocated to the broadcast and the wireless communication, by the communication resource allocation situation presentation user interface 161.

The communication resource allocation plan selection user interface 162 is a user interface for having the operator of the WSD 100 select an allocation plan of the communication resources. The communication resource allocation unit 130 allocates the communication resources to the broadcast and the wireless communication, on the basis of the allocation plan of the communication resources selected by the communication resource allocation plan selection user interface 162.

The communication resource profit-loss prediction presentation user interface 163 is a user interface for presenting the prediction of the profit and loss generated when the communication resources are allocated to the broadcast and the wireless communication.

The communication resource situation prediction unit 170 predicts the profit and loss generated when the communication resources are allocated to the broadcast and the wireless communication. The communication resource situation prediction unit 170 can refer to the data stored in a communication resource situation database (DB) 180, when predicting the profit and loss generated when the communication resources are allocated to the broadcast and the wireless communication. The communication resource profit-loss prediction presentation user interface 163 presents the value predicted by the communication resource situation prediction unit 170, when presenting the prediction of the profit and loss generated when the communication resources are allocated to the broadcast and the wireless communication.

The communication resource allocation user interface 160 has the configuration illustrated in FIG. 9, to have the operator decide the allocation plan of the communication resources, and to perform the operation relevant to the actual allocation of the communication resource.

### [1.5. Variant Example]

As described above, the WSD 100 according to the embodiment of the present disclosure can strengthen the communication network without interfering the broadcast, by allocating the communication resources to the broadcast and the wireless communication.

The WSD 100 according to the embodiment of the present disclosure can be said to be a wireless communication base station that also serves as substitution of the broadcast, and is not a system that only performs the broadcast and the wireless simultaneously. Thus, the effect of the WSD 100 as the wireless communication base station that substitutes the broadcast will be considered. For example, further effect as wireless communication base station is conceived, by adding to the WSD 100 a function for adding up the re-delivery situations of the re-delivered broadcast content as below.

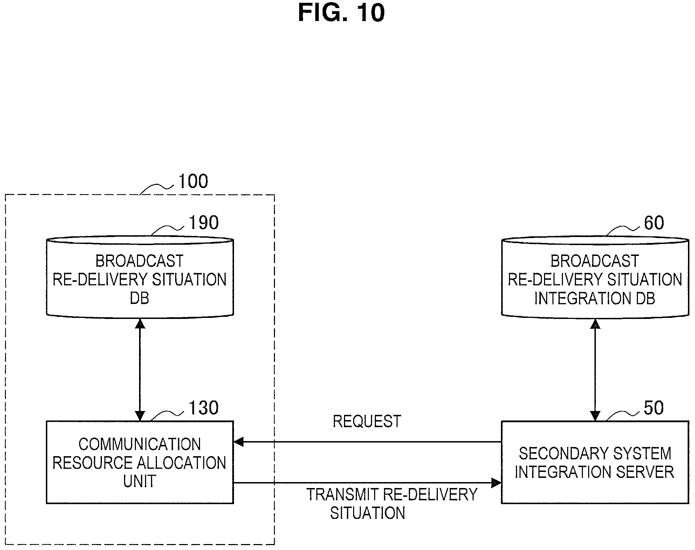

FIG. 10 is an explanatory diagram illustrating a variant example of the WSD 100 according to the embodiment of the present disclosure.

FIG. 10 illustrates a configuration example of the WSD 100 according to the embodiment of the present disclosure, which includes a communication resource allocation unit 130 that allocates the communication resources, and a broadcast re-delivery situation database 180 that stores the result obtained by adding up the re-delivery situations of the content of the re-delivered digital television broadcast.

The communication resource allocation unit 130 adds up the re-delivery situations of the content of the digital television broadcast, so that the WSD 100 can measure the viewer rating of the digital television broadcast. Usually, the broadcast radio wave is one way, and therefore it is necessary to install a special device at the receiver side, in order to measure the viewer rating. However, the communication resource allocation unit 130 adds up the re-delivery situations of the content of the digital television broadcast, and thereby the WSD business operator can virtually perform the substitution of the viewer rating measurement.

That is, the WSD business operator can deliver the broadcast by using bidirectional communication. When the broadcast is delivered by using the bidirectional communication, the WSD 100 saves information, such as a time at which the re-delivery is performed, in the broadcast re-delivery situation database 180.

FIG. 10 also illustrates a secondary system integration server 50 that integrates the wireless communication system that uses the white space, and a broadcast re-delivery situation integration database 60 that stores the data that the secondary system integration server 50 has acquired from each WSD 100.

The WSD 100 transmits the data of the re-delivery situations of the content of the digital television broadcast which were added up, to the secondary system integration server 50 that integrates the wireless communication system that uses the white space. The secondary system integration server 50 can easily add up the viewer rating of the digital television broadcast, without installing a special device at the receiver side, as in the past.

Also, the secondary system integration server 50 that integrates the wireless communication systems that uses the white space easily acquires the viewer rating for each age group or for each of male and female, on the basis of the profile or the like of the user who wishes the re-delivery of the content, which is registered in each WSD 100.

Also, the secondary system integration server 50 can roughly estimate the preference, the family configuration, or the like of the user, by using the tendency of the channel of the re-delivered content, and can calculate the viewer rating on the basis of the preference, the family configuration, or the like of the estimated user. The secondary system integration server 50 may perform clustering or the like on a distance basis by using a collaborative filter or the like, for example, when estimating the preference. Also, the secondary system integration server 50 may be used to estimate unknown information, such as estimation of the family configuration. The secondary system integration server 50 may use a technology for determining or regressing the unknown information, with the channel, the utilized time, and the like as explanatory variables, when estimating the unknown information. The secondary system integration server 50 may use a machine learning technology or the like, as a method of determination or regression. The secondary system integration server 50 may use a support vector machine (SVM), a neural network (deep learning), or the like for example, as the machine learning technology.

The WSD 100 according to the embodiment of the present disclosure may change and re-deliver a part of the broadcast content in accordance with the area and the viewer, when re-delivering the content from the broadcast content re-delivery unit 140. That is, the WSD 100 according to the embodiment of the present disclosure can replace a uniformly broadcasted commercial with an appropriate commercial in accordance with the area and the viewer, and re-deliver the appropriate commercial. Here, "in accordance with the area" means "in accordance with the area where the WSD business operator or the viewer exists". Also, "in accordance with the viewer" means "in accordance with the profile of the viewer (as described above, male and female, age, family configuration, preference, residence type (owned house, apartment, shared housing, or independent house), belongings (whether a car or bike is possessed, whether a musical instrument is possessed) or the like".

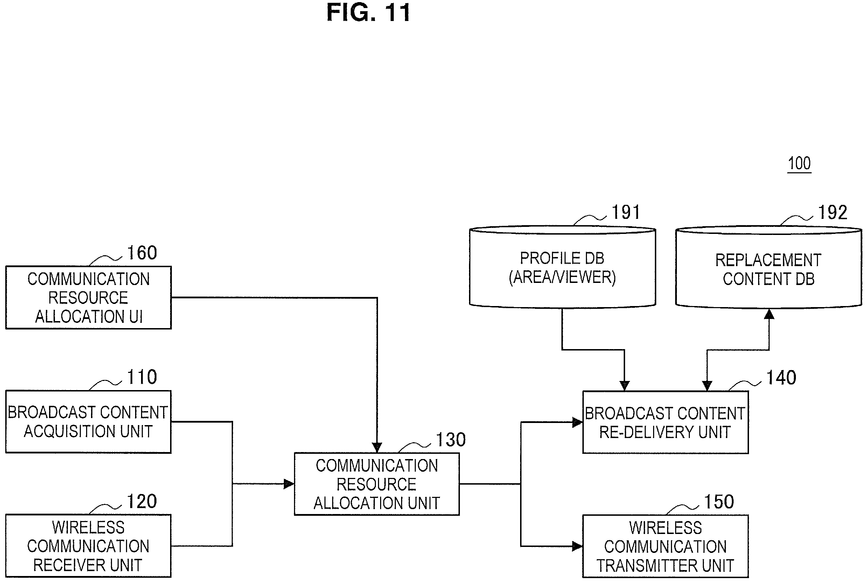

FIG. 11 is an explanatory diagram illustrating a variant example of the WSD 100 according to the embodiment of the present disclosure. The WSD 100 illustrated in FIG. 11 includes a configuration in which a profile database 191 and a replacement content database 192 are added to the WSD 100 illustrated in FIG. 7. The broadcast content re-delivery unit 140 changes and re-delivers a part of the broadcast content, with reference to the profile database 191 and the replacement content database 192, when re-delivering the content of the digital television broadcast.

The profile database 191 is a database in which an area where the viewer exists, the profile of the above viewer, and the like are stored. The replacement content database 192 is a database in which the information relevant to the content replaced with a part of the content is stored. In the replacement content database 192, the content itself replaced with a part of the content may be stored, and information for referring to the content replaced with a part of the content, such as ID information, may be stored.

Note that, when a part of the broadcast content is changed, a user interface for causing the operator to decide the content to be changed may be used. The user interface for causing the operator to decide the content to be changed will be described in detail later.

Note that at least one of the profile database 191 and the replacement content database 192 may be provided in a device that is different from the WSD 100.

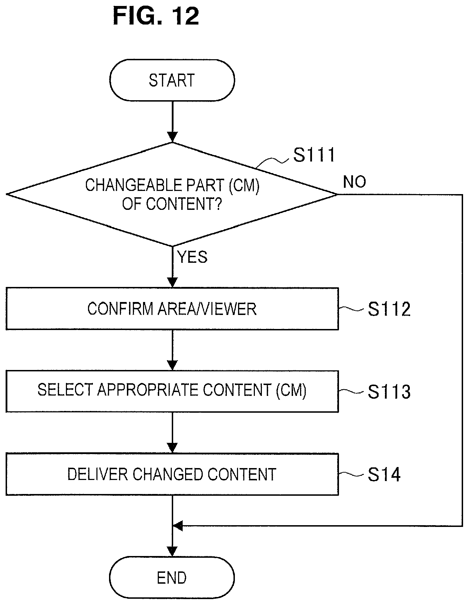

FIG. 12 is a flow diagram illustrating an operation example of the WSD 100 according to the embodiment of the present disclosure. The flow diagram illustrated in FIG. 12 is an operation example when changing and re-delivering a part of the broadcast content in accordance with the area and the viewer, when re-delivering the content from the broadcast content re-delivery unit 140. The broadcast content re-delivery unit 140 executes the process illustrated in FIG. 12, for example. In the following, an operation example of the WSD 100 according to the embodiment of the present disclosure will be described by using FIG. 12.

The WSD 100 first determines whether or not the site of the content to be changed is a changeable part, when changing a part of the broadcast content (step Sill). An example of a changeable part is a commercial or the like.

If the site of the content to be changed is not a changeable part (step Sill, No), the WSD 100 ends the process without changing the broadcast content. On the other hand, if the site of the content to be changed is a changeable part (step Sill, Yes), the WSD 100 subsequently confirms the area to which the content is re-delivered and the information of the viewer that views the re-delivered content (step S112). The WSD 100 refers to the profile database 191, when confirming the information of the area and the viewer in step S112.

Upon confirming the information of the area and the viewer in above step S112, the WSD 100 subsequently selects appropriate content for the area and the viewer confirmed in above step S112 (step S113). The WSD 100 refers to the replacement content database 192, when selecting the content in step S113.

Upon selecting the content in above step S113, the WSD 100 subsequently delivers the changed content after replacing the content (step S114).

The present embodiment is characterized in getting information of what the profile the broadcasted target has, when the WSD 100 substitutes for the digital television broadcast. Thus, the advertisement business operator can access to the consumer through the broadcast content more efficiently and appropriately than the past.

Specifically, the WSD 100 can provide a person who has a car or a bike with repurchase information of car and bike, and can recommend an owned house for a person who lives in apartment housing. As described above, if appropriate advertisement can be delivered to the appropriate target, the effect of the advertisement improves. Also, as a result of rising advertisement unit price, there is an effect that the advertisement revenue increases. Note that the information such as whether or not a car or bike is possessed and whether apartment housing or the owned house may be the information registered in advance, and may be the information estimated from the viewing history and the registration information, by using a method of machine learning and data mining.

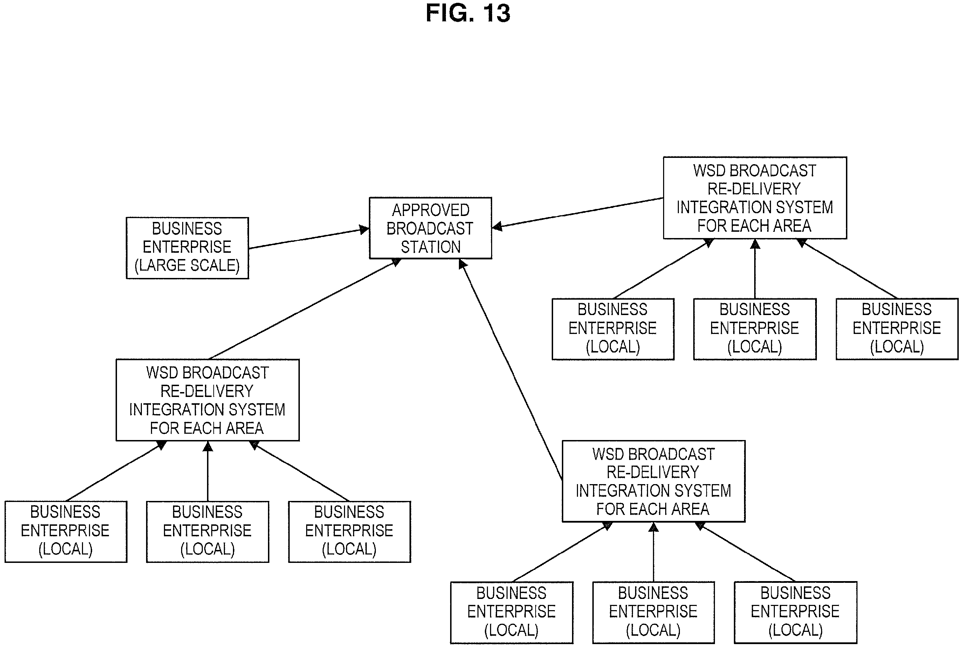

FIG. 13 is a diagram for describing a sequence of the advertisement revenue that uses the WSD 100 according to the present embodiment.

Usually, the approved broadcast station provides a space (time) for advertisement, from a business enterprise that wants to issue an advertisement, and receives money as the price from the business enterprise. However, in this usual method, the approved broadcast station is unable to confirm the profile or the like of the actual viewer in the broadcast or the like, and therefore is not effective for the actual viewer necessarily.

On the other hand, in the broadcast re-delivery integration system by the WSD for each area, the delivered area is obvious, and therefore the local advertisement or the like that is limited to a specific area is more effective than obtaining an advertisement spot in the frame of the broadcast of the nation-wide area, for example.

Then, the WSD business operator that exists for each area for example requests the approved broadcast station or the like to replace the advertisement broadcasted in the advertisement spot for this nation-wide area with the advertisement toward the specific area. Here, if the price that the local business enterprise earns by the replacement is larger than the price paid to the large business enterprise that broadcasts the advertisement for the nation-wide area, which owns the advertisement spot originally, the WSD business operator requests the authorization of the replacement of the advertisement. The approved broadcast station buys back the advertisement space of the large business enterprise by refunding money for the replacement to the large business enterprise, and provides the re-delivery system for each area with this space. How much is refunded at the time of the replacement is decided in advance in the contract between the approved broadcast station and the large business enterprise in advance. Then, the price decided on the basis of this contract is presented as the price that the WSD business operator pays to the large business enterprise at the time of the replacement. Further, with regard to this presented price, the approved broadcast station may generate a profit by making the price received from the WSD business operator greater than the payment by cancellation.

The re-delivery system of the content of the digital television broadcast that uses the WSD 100 can provide the advertisement content that can appeal to the viewer more appropriately.

As described above, the broadcast in the wireless system is substituted more, and thereby it is conceived that the on-demand delivery is promoted, and the radio wave tower is reduced.

To summarize the above, by the substitution of the digital television broadcast by the wireless system that uses the white space, the wireless communication that uses the white space is enabled in the region that has been unable to utilize the white space in the past, and the wireless communication capacity improves.

Also, by the substitution of the digital television broadcast by the wireless system that uses the white space, the WSD business operator selects a resource allocation plan in consideration of profit and loss and prediction for the business, and the WSD business operator is expected to become widespread.

Also, by the substitution of the digital television broadcast by the wireless system that uses the white space, the WSD business operator can acquire the detailed information of the viewer rating of the digital television broadcast, and the content including CM can be appropriately supplied to the viewer of the digital television broadcast.

Also, if the method that re-delivers the broadcast in the white space become widespread by the substitution of the digital television broadcast by the wireless system that uses the white space, the power of the radio wave tower itself is expected to be reduced or removed.

Also, by the substitution of the digital television broadcast by the wireless system that uses the white space, on-demand broadcast by the WSD is expected to become widespread.

### [1.6. User Interface Example]

Next, an example of a user interface that the WSD 100 according to the present embodiment presents to the operator or the like will be described.

First, a user interface for selecting a communication resource allocation plan, for the business operator of the white space wireless system that uses the WSD 100 according to the present embodiment will be described.

First, the income and expenditure of the operator of the WSD 100 will be considered. The operator of the WSD 100 earns the cost from the communication company by the wireless communication, and earns the price from the broadcast company, and receives the penalty.

Here, the price obtained from the communication company by the operator of the WSD 100 is the price obtained in return for lending the communication network. Also, the price obtained from the broadcast company by the operator of the WSD 100 is the price obtained in return for re-delivering the broadcast. Also, although the penalty received from the broadcast company by the operator of the WSD 100 is the penalty for interfering the broadcast by the communication, this is intended to restore the broadcast with responsibility by the operator of the WSD 100 so as not to be charged this penalty, rather than charging the penalty from the broadcast station.

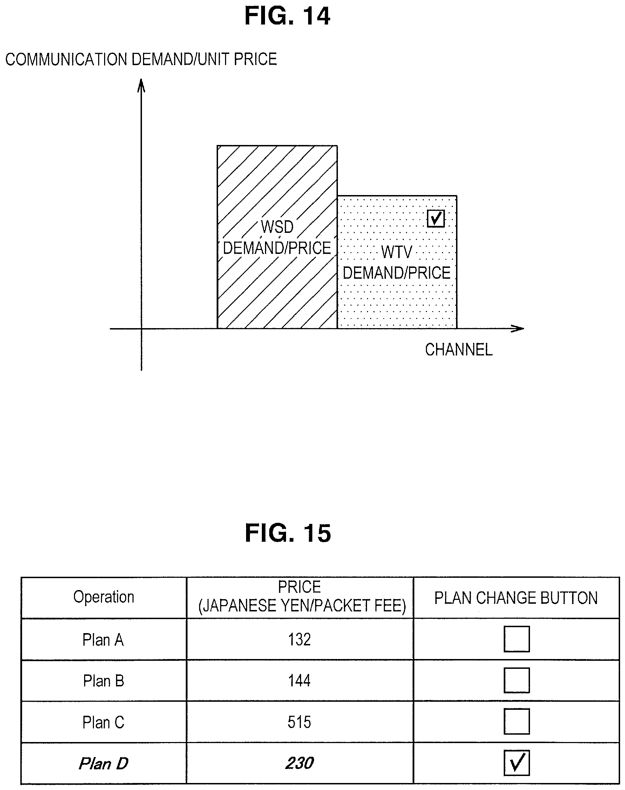

FIG. 14 is an explanatory diagram illustrating an example of the user interface for the operator of the WSD 100. FIG. 14 illustrates an example of the user interface for the operator of the WSD 100 confirming the current demand of the WSD 100 and the digital television broadcast and the unit price decided in accordance with the demand and supply.

The operator of the WSD 100 can confirm the current demand of the WSD 100 and the digital television broadcast and the price decided in accordance with the demand and supply, with the user interface illustrated in FIG. 14.

As illustrated in FIG. 14, if there is a user interface that displays the communication unit price at the time of utilizing the white space and the communication unit price at the time of re-delivering the digital television broadcast, the operator of the WSD 100 can obtain a guideline for appropriately determining whether the radio resources of the present moment is to be utilized in the wireless communication that uses the white space or is to be utilized in the re-delivery of the digital television broadcast. Note that the communication unit price at the time of the re-delivery of the digital television broadcast may change in tandem with the viewer rating of the digital television broadcast.

Next, an interface with which the operator actually decides the communication resource allocation will be described. FIG. 15 is an explanatory diagram illustrating an example of the user interface for the operator of the WSD 100. FIG. 15 illustrates an example of a communication resource allocation plan selection user interface 162 for the operator of the WSD 100 confirming the prices including the current delivery plan and other delivery plans.

The operator of the WSD 100 decides the communication resource allocation by changing the plan, by using the communication resource allocation plan selection user interface 162 illustrated in FIG. 15. The WSD 100 decides the allocation of the channel or the like, in accordance with the plan set by the operator of the WSD 100. By causing the operator to manipulate the user interface illustrated in FIG. 15, the WSD 100 does not involve the operator in a difficult system of the channel or the like, but can allocate the resources optimally.

For example, four delivery plans in the example of the communication resource allocation plan selection user interface 162 illustrated in FIG. 15 include options, such as a plan A which is FIX (a fixed ratio of the re-delivery of the digital television broadcast and the wireless communication that uses the white space); a plan B which is automatic optimization; a plan C which is following the guideline of the communication company (deciding in accordance with the request of the communication company); and a plan D which is following the guideline of the broadcast company (deciding in accordance with the request of the broadcast company).

The plan D is selected at the present moment, in the example illustrated in FIG. 15. The operator of the WSD 100 views the price indicated by the communication resource allocation plan selection user interface 162, and selects the best plan for the operator (for example, the plan of the highest price), and makes a change by using a plan change button.

For example, the real-time popular content, such as sports, increases its demand of the digital television broadcast. Hence, with regard to such popular content, the unit price of the re-delivery of the digital television broadcast becomes higher. That is, the approved broadcast station that delivers the content and the business operator that puts an advertisement in the content want re-delivery intensely, and therefore the unit price becomes higher. Thus, the broadcast business operator may decide the unit price in accordance with the popularity of the content.

Also, conversely, in the time slot of going to school or going to work, or in the time slot of going home from evening to night, the demand of the wireless communication that uses the white space increases, for example. Hence, in such a time slot, the unit price of the wireless communication that uses the white space becomes higher. The operator of the WSD 100 selects a plan that includes more wireless communication that uses the white space. In response, the WSD 100 assigns the resources in such a manner that the wireless communication that uses the white space automatically increases. Note that the communication resource allocation plan selection user interface 162 may present a recommended allocation plan, to the operator of the WSD 100. For example, if the setting recommends the plan of the highest price, the communication resource allocation plan selection user interface 162 may present a recommendation of the plan C of the highest price.

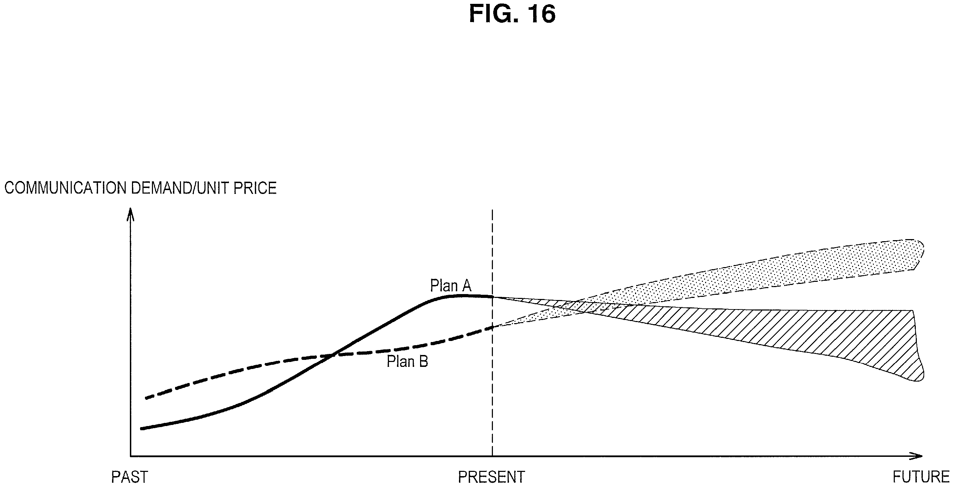

The WSD 100 may generate a time-series graph, to allow the operator to confirm the unit price. FIG. 16 is an explanatory diagram illustrating an example of the user interface for the operator of the WSD 100. FIG. 16 illustrates an example of the user interface when presenting a price fluctuation with the time-series graph, to the operator of the WSD 100. The time-series graph illustrated in FIG. 16 does not only display the fluctuation of the price in accordance with the time to the present moment, but also to a certain degree predicts and presents the fluctuation of the price in accordance with the time of future.

The WSD 100 may generate a future price fluctuation predicted from the previous price trend or the like, when generating the time-series graph illustrated in FIG. 16. The WSD 100 may thickly draw the future price in consideration of the prediction error as illustrated in FIG. 16. The WSD 100 may use the average and dispersion of the past same condition, when predicting this future price fluctuation. Also, the WSD 100 may use the technology of machine learning and data mining, in order to increase the prediction accuracy of the future price fluctuation. The regression that uses the vector machine, the prediction of the observation value that uses the time-series data and the time-series model (hidden Markov model), or the like are conceived, as the technology of the machine learning. The technology disclosed in JP 2013-211616A or the like may be used with respect to the prediction that uses the regression using the vector machine, for example. Also, the technology disclosed in JP 2013-205170A, JP 2013-205170A, or the like may be used, with respect to the prediction of the observation value that uses the hidden Markov model, for example.

By predicting and presenting the future price in time series as described above, the WSD 100 can allow the operator to decide the plan according to the prediction, when the operator has a schedule of going out or the like and is unable to decide the plan in real time.

According to the present embodiment, the white space business operator can confirm the viewer rating of the digital television broadcast in the DTV receiver 200, without installing a device for measuring the viewer rating in the DTV receiver 200 as described above. Also, the white space business operator can change a part of the content of the digital television broadcast as necessary.

That is, the white space business operator can substitute the wireless system of both directions for the broadcast which is one-way direction in a normal situation. Thus, by using the WSD 100 according to the present embodiment, the white space business operator enables comprehension of the reception request from the user, the accurate comprehension of the viewing situation, the provision of the appropriate content in accordance with the area and the viewer. Thus, subsequently, user interfaces used for comprehension of the reception request from the user, the accurate comprehension of the viewing situation, the provision of the appropriate content in accordance with the area and the viewer will be described.

First, a user interface for presenting the information of the viewer rating to the operator of the WSD 100 will be described. The WSD 100 may present the information of the viewer rating of the present moment or before only, but may present the information including the prediction of the fluctuation of the viewer rating of the future.

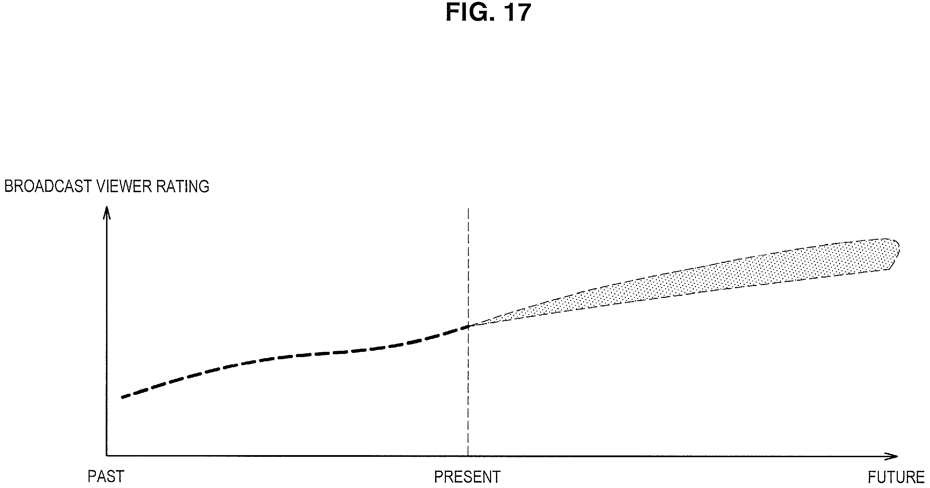

FIG. 17 is an explanatory diagram illustrating an example of the user interface for the operator of the WSD 100. FIG. 17 illustrates an example of the user interface when presenting the fluctuation of the viewer rating in the time-series graph, to the operator of the WSD 100. The prediction of the viewer rating may be performed by the WSD 100 and may be performed by another device. Although the prediction methods of the viewer rating are various, when the broadcast content, the time slot, and the like are input, the viewer rating of the past similar broadcast content or the general time slot is merged, and the predicted viewer rating may be output, for example.

As described above, it is desirable that there is a server that bundles a plurality of WSDs 100 in order to confirm the viewer rating of the digital television broadcast, but the information of this viewer rating can be shared in each WSD 100. The information of the viewer rating is shared in each WSD 100, and thereby the white space business operator and the operator of the WSD 100 can change the price of each plan and the prediction of the viewer rating, on the basis of the viewer rating of the present moment or before, the prediction of the future viewer rating, and the like.

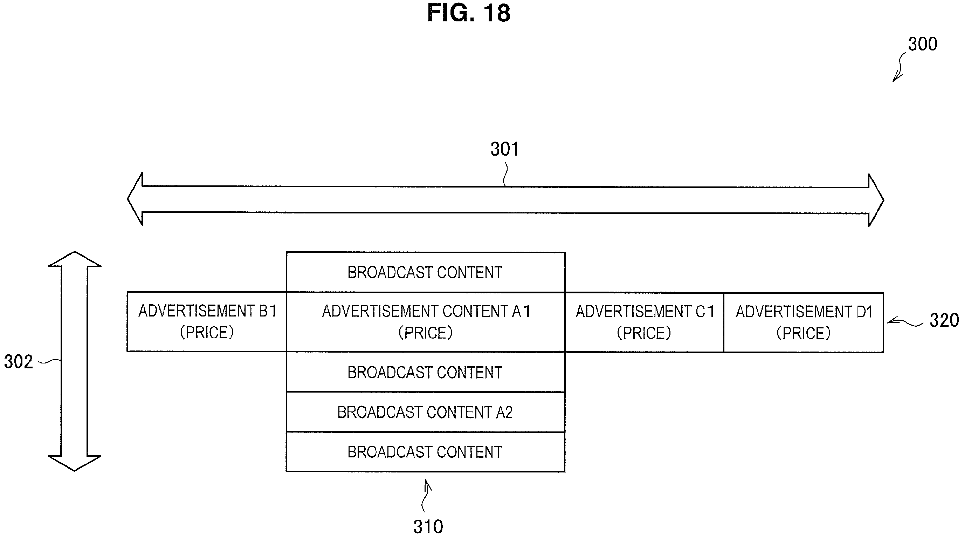

Next, a user interface for changing a part of the content will be described. FIG. 18 is an explanatory diagram illustrating an example of the user interface for the operator of the WSD 100. FIG. 18 illustrates an example of a user interface 300 for changing the advertisement content broadcasted between the content of the digital television broadcast.

The user interface 300 illustrated in FIG. 18 includes an advertisement content slider 301 and a time axis changing slider 302. Each slider may be moved by the user placing the cursor of the mouse pointer thereon, and may slide in response to a flick input or the like if a touch panel is provided in the display screen. Note that, when the touch panel is provided in the display screen, each of the sliders is needless to be displayed necessarily, and only slide operation by the user may be executed.

The time axis changing slider 302 is a slider for setting a focused time axis, from among the content group 310. A focused time slot changes, in accordance with the movement of the time axis changing slider 302. For example, if the time axis changing slider 302 is manipulated in the downward direction when the advertisement content A1 is focused, the next advertisement content A2 is focused.

The advertisement content slider 301 is the slider for selecting the advertisement content from among the advertisement content group 320. The focused advertisement content switches like A1, B1, C1, D1, in response to the movement of the advertisement content slider 301. When the operator of the WSD 100 selects the advertisement content by manipulating the advertisement content slider 301, the advertisement content broadcasted to the viewer who receives the re-delivery of the content from the WSD 100 is switched.

For example, the methods for selecting the content include various methods, such as a method that sets the content focused at the slided time point, a method that pushes a predetermined button after focusing, and a method that selects and clicks other displayed content, and are not limited to a specific method.

Note that, in FIG. 18, the unit price written under the advertisement content is the advertisement revenue fee for displaying the advertisement. This advertisement revenue amount may be the advertisement revenue fee obtained by the operator of the WSD 100; may be the advertisement revenue fee of the white space business operator that integrates the operator of the WSD 100; or may be the advertisement revenue fee of the broadcast station that broadcasts the original the content.

The advertisement revenue fee of each advertisement content is obtained by calculating a difference between the advertisement fees when canceling the advertisement content in the original the content and instead delivering other advertisement content. However, there are a large number of advertisement spots in single content in some cases, and setting the advertisement content of change target to each advertisement spot one by one is a large burden for the white space business operator. Thus, the white space business operator may set something like the advertisement plan in advance, and the WSD 100 may present the user interface for allowing the operator of the WSD 100 to select the advertisement plan.

The advertisement plan may be separated in accordance with gender and age group, such as a plan that selects the original broadcast, a plan for male and old generation, a plan for female and young generation, and a plan for male and child, and may be separated in accordance with area.

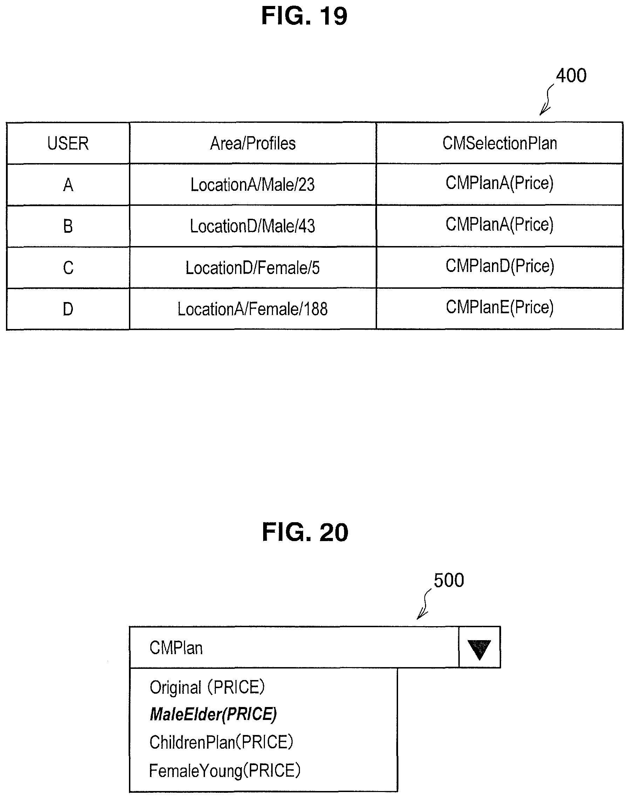

FIG. 19 is an explanatory diagram illustrating an example of the user interface for the operator of the WSD 100. FIG. 19 illustrates an example of a user interface 400 that presents the viewer registered in the WSD 100, the area and the profile of the viewer, and the advertisement plan for the viewer. As illustrated in FIG. 19, by presenting the advertisement plan selected for the user, the WSD 10 does not allow the operator to set the advertisement content finely, but automatically selects the advertisement content of the high price on the basis of the advertisement plan.

When the selected advertisement plan is recognized to be inappropriate from the viewing situation of the actual broadcast content or the like, it is envisaged that the operator of the WSD 100 wants to change the advertisement plan. The WSD 100 may present a user interface for allowing the operator to change the advertisement plan. FIG. 20 is an explanatory diagram illustrating an example of the user interface for the operator of the WSD 100. FIG. 20 illustrates an example of a user interface 500 for allowing the operator to change the advertisement plan.

According to the embodiment of the present disclosure, the WSD 100 can allow the operator to confirm the unit prices of the communication and the broadcast, various prices of the resource allocation plans of communication and the broadcast, and the time-series prediction of the resource allocation plan, and allows the operator to select and change the resource allocation plan.

Also, according to the embodiment of the present disclosure, the WSD 100 can allow the operator to confirm the viewer rating of each area and each viewer profile, and the time-series prediction of the viewer rating, and can allow the viewer to select and change the advertisement content for each viewer, and can allow the viewer to select and change the advertisement plan for each viewer.

### <2. Conclusion>

As described above, according to the embodiment of the present disclosure, there is provided the WSD 100 that can expand the capacity of the wireless communication, without interfering the broadcast content, by combining the function for performing the wireless communication by utilizing the frequency band used by the broadcast radio wave or the frequency bands around it and the function for acquiring and re-delivering the broadcast content by using the communication resources that is owned.

The WSD 100 according to the embodiment of the present disclosure can present the interface for allowing the operator to confirm and change the plan for allocating the communication resources in accordance with the prices at the time of re-delivering the broadcast content and the wireless communication. Also, the WSD 100 according to the embodiment of the present disclosure can allow the business operator and the operator to confirm the viewer rating without installing a special device, and can provide the viewer with the appropriate advertisement content, by re-delivering the content of the digital television broadcast.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the communication resource allocation unit 130 may control the intensity of the wireless communication, when allocating the communication resources to the broadcast and the wireless communication. When the communication resource allocation unit 130 additionally controls the intensity of the wireless communication, while allocating the communication resources to the broadcast and the wireless communication, the communication resource allocation unit 130 can perform the wireless communication with higher intensity, and broaden the coverage area of the wireless communication of the WSD 100, if the frequency band of the allocation target is not used in the broadcast.

Also, the processing steps in each process in this specification are not strictly limited to execution in a time series following the sequence described in a flowchart or a sequence diagram. For example, the processing steps in each process may be executed in a sequence that differs from a sequence described herein as a flowchart or a sequence diagram, and furthermore may be executed in parallel.

Also, a computer program for functioning the processor (for example, a CPU, a DSP, etc.) included in the device (for example, the WSD, the DTV receiver, the management server, or their modules) of the present specification as the above device (in other words, a computer program for causing the above processor to execute the operation of the component of the above device) can be created. Also, a recording medium that has recorded the computer program may be provided. Also, there may be provided a device (for example, a completed product, or a module (a component, a processing circuit, a chip, etc.) for the completed product) that includes a memory for storing the above computer program and one or more processors that can execute the above computer program. Also, a method that includes the operation of one or more components (for example, the information acquisition unit and/or the control unit, etc.) of the above device is included in the technology according to the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 10: radio wave tower
- 11: coverage area
- 12: difficult viewing area
- 20: white space
- 30: relay station
- 40: broadcast station
- 50: secondary system integration server
- 60: broadcast re-delivery situation integration database
- 100: WSD
- 200: DTV receiver
- 300: user interface
- 301: advertisement content slider
- 302: time axis changing slider
- 310: content group
- 320: advertisement content group
- 400: user interface
- 500: user interface

## Claims

1. A white space wireless device comprising:
a communication resource allocation unit (130) configured to
- acquire current and/or predicted future demand information and/or supply information of a first broadcast digital television communication service that uses a predetermined frequency band of a white space and current and/or predicted future demand information and/or supply information of a second communication service that secondarily utilizes the predetermined frequency band of the white space,
- allocate a communication resource of the predetermined frequency band to the first communication service and to the second communication service on the basis of the current and/or predicted future demand information and/or supply information, and a broadcast content re-delivery unit (140) configured to:
- generate information for replacing a part of data transmitted by the first communication service on the basis of an allocation result of the communication resource with replacement data transmitted by the first communication service.

2. The device according to claim 1, wherein
the control unit (130) is configured to generate information for presenting the acquired information.

3. The device according to any preceding claim, wherein
the control unit (130) is configured to generate an allocation plan of the communication resource on the basis of the acquired information.

4. The device according to claim 3, wherein
the control unit (130) is configured to generate information for presenting the allocation plan to recommend.

5. The device according to any preceding claim, wherein
the control unit (130) is configured to acquire a unit price when data is transmitted in the predetermined frequency band.

6. The device according to claim 5, wherein
the unit price is decided in accordance with content of data provided by the first communication service or in accordance with a time slot during which data is communicated by the second communication service.

7. The device according to any preceding claim, wherein
the control unit (130) is configured to allocate the communication resource on the basis of a request from a receiver device that uses the first communication service.

8. The device according to claim 7, wherein
the control unit (130) is configured to decide to transmit data by the first communication service to the receiver device only in the case where the receiver device has a right to use the first communication service or in the case of having a right to transmit the data provided by the first communication service.

9. The device according to any preceding claim, wherein
the control unit (130) is configured to add up the number of transmission situations of data provided by the first communication service in which data is transmitted by the first communication service.

10. The device according to any preceding claim, wherein
the control unit (130) is configured to control a signal intensity of a signal used for transmitting data by the second communication service.

11. The device according to any preceding claim, wherein
the control unit (130) is configured to allocate a communication resource to the first communication service and the second communication service, in each frequency band.

12. A method of a white space wireless device, said method comprising:
acquiring current and/or predicted future demand information and/or supply information of a first broadcast digital television communication service that uses a predetermined frequency band of a white space and current and/or predicted future demand information and/or supply information of a second communication service that secondarily utilizes the predetermined frequency band of the white space; and
allocating a communication resource of the predetermined frequency band to the first communication service and the second communication service on the basis of the current and/or predicted future demand information and/or supply information, and
- generating information for replacing a part of data transmitted by the first communication service on the basis of an allocation result of the communication resource with replacement data transmitted by the first communication service.

13. A computer program comprising program code means for causing a white space wireless device as claimed in claim 1 to carry out the steps of the method as claimed in claim 12 when said computer program is carried out on the white space wireless device.

## Patentansprüche

1. Drahtlose "White-Space"-Vorrichtung, die Folgendes umfasst:
eine Kommunikationsbetriebsmittelzuteilungseinheit (130), die konfiguriert ist zum:
- Erfassen von aktuellen und/oder vorhergesagten zukünftigen Bedarfsinformationen und/oder Versorgungsinformationen eines ersten digitalen Rundfunkfernsehkommunikationsdienstes, der ein vorbestimmtes Frequenzband eines White Space verwendet, und von aktuellen und/oder vorhergesagten zukünftigen Bedarfsinformationen und/oder Versorgungsinformationen eines zweiten Kommunikationsdienstes, der das vorbestimmte Frequenzband des White Space sekundär verwendet,
- Zuteilen eines Kommunikationsbetriebsmittels des vorbestimmten Frequenzbandes zu dem ersten Kommunikationsdienst und zu dem zweiten Kommunikationsdienst anhand der aktuellen und/oder vorhergesagten zukünftigen Bedarfsinformationen und/oder Versorgungsinformationen und eine Rundfunkinhaltsneuliefereinheit (140), die konfiguriert ist zum:
- Erzeugen von Informationen zum Ersetzen eines Teils von Daten, die durch den ersten Kommunikationsdienst gesendet werden, anhand eines Zuteilungsergebnisses des Kommunikationsbetriebsmittels durch Ersatzdaten, die durch den ersten Kommunikationsdienst gesendet werden.

2. Vorrichtung nach Anspruch 1, wobei
die Steuereinheit (130) konfiguriert ist, Informationen zum Darstellen der erfassten Informationen zu erzeugen.

3. Vorrichtung nach einem vorhergehenden Anspruch, wobei
die Steuereinheit (130) konfiguriert ist, einen Zuteilungsplan des Kommunikationsbetriebsmittels anhand der erfassten Informationen zu erzeugen.

4. Vorrichtung nach Anspruch 3, wobei
die Steuereinheit (130) konfiguriert ist, Informationen zum Darstellen des Zuteilungsplans zum Empfehlen zu erzeugen.

5. Vorrichtung nach einem vorhergehenden Anspruch, wobei
die Steuereinheit (130) konfiguriert ist, einen Einheitspreis zu erfassen, wenn Daten in dem vorbestimmten Frequenzband gesendet werden.

6. Vorrichtung nach Anspruch 5, wobei
der Einheitspreis in Übereinstimmung mit Inhalt von Daten, die durch den ersten Kommunikationsdienst geliefert werden, oder in Übereinstimmung mit einem Zeitfenster, während dessen Daten durch den zweiten Kommunikationsdienst kommuniziert werden, entschieden wird.

7. Vorrichtung nach einem vorhergehenden Anspruch, wobei
die Steuereinheit (130) konfiguriert ist, das Kommunikationsbetriebsmittel anhand einer Anforderung von einer Empfängervorrichtung, die den ersten Kommunikationsdienst verwendet, zuzuteilen.

8. Vorrichtung nach Anspruch 7, wobei
die Steuereinheit (130) konfiguriert ist, zu entscheiden, nur in dem Fall, in dem die Empfängervorrichtung das Recht besitzt, den ersten Kommunikationsdienst zu verwenden, oder in dem Fall, in dem sie das Recht besitzt, die durch den ersten Kommunikationsdienst gelieferten Daten zu senden, Daten durch den ersten Kommunikationsdienst an die Empfängervorrichtung zu senden.

9. Vorrichtung nach einem vorhergehenden Anspruch, wobei
die Steuereinheit (130) konfiguriert ist, die Anzahl von Übertragungssituationen von Daten, die durch den ersten Kommunikationsdienst geliefert werden, in denen Daten durch den ersten Kommunikationsdienst gesendet werden, zu addieren.

10. Vorrichtung nach einem vorhergehenden Anspruch, wobei
die Steuereinheit (130) konfiguriert ist, eine Signalstärke eines Signals, das für das Senden von Daten durch den zweiten Kommunikationsdienst verwendet wird, zu steuern.

11. Vorrichtung nach einem vorhergehenden Anspruch, wobei
die Steuereinheit (130) konfiguriert ist, dem ersten Kommunikationsdienst und dem zweiten Kommunikationsdienst in jedem Frequenzband ein Kommunikationsbetriebsmittel zuzuteilen.

12. Verfahren einer drahtlosen "White-Space"-Vorrichtung, wobei das Verfahren Folgendes umfasst:
Erfassen von aktuellen und/oder zukünftigen Bedarfsinformationen und/oder Versorgungsinformationen eines ersten digitalen Rundfunkfernsehkommunikationsdienstes, der ein vorbestimmtes Frequenzband eines White Space verwendet, und von aktuellen und/oder vorhergesagten zukünftigen Bedarfsinformationen und/oder Versorgungsinformationen eines zweiten Kommunikationsdienstes, der das vorbestimmte Frequenzband des White Space sekundär verwendet; und
Zuteilen eines Kommunikationsbetriebsmittels des vorbestimmten Frequenzbandes zu dem ersten Kommunikationsdienst und zu dem zweiten Kommunikationsdienst anhand der aktuellen und/oder vorhergesagten zukünftigen Bedarfsinformationen und/oder Versorgungsinformationen und
Erzeugen von Informationen zum Ersetzen eines Teils von Daten, die durch den ersten Kommunikationsdienst gesendet werden, anhand eines Zuteilungsergebnisses des Kommunikationsbetriebsmittels durch Ersatzdaten, die durch den ersten Kommunikationsdienst gesendet werden.

13. Computerprogramm, das Programmcodemittel umfasst, um zu bewirken, dass eine drahtlose "White-Space"-Vorrichtung nach Anspruch 1 die Schritte des Verfahrens nach Anspruch 12 ausführt, wenn das Computerprogramm auf der drahtlosen "White-Space"-Vorrichtung ausgeführt wird.

## Revendications

1. Dispositif sans fil d'espace blanc, comprenant :
une unité d'attribution de ressource de communication (130) configurée pour :
- acquérir des informations de demande actuelle et/ou future prédite et/ou des informations de fourniture d'un premier service de communication de télévision numérique de diffusion qui utilise une bande de fréquence prédéterminée d'un espace blanc et des informations de demande actuelle et/ou future prédite et/ou des informations de fourniture d'un second communication service qui utilise de façon secondaire la bande de fréquence prédéterminée de l'espace blanc,
- attribuer une ressource de communication de la bande de fréquence prédéterminée au premier service de communication et au second service de communication sur la base des informations de demande actuelle et/ou future prédite et/ou des informations de fourniture, et une unité de redistribution de contenu de diffusion (140) configurée pour :
- générer des informations pour remplacer une partie de données transmises par le premier service de communication sur la base d'un résultat d'attribution de la ressource de communication avec des données de remplacement transmises par le premier service de communication.

2. Dispositif selon la revendication 1, dans lequel
l'unité de commande (130) est configurée pour générer des informations pour présenter les informations acquises.

3. Dispositif selon une quelconque revendication précédente, dans lequel
l'unité de commande (130) est configurée pour générer un plan d'attribution de la ressource de communication sur la base des informations acquises.

4. Dispositif selon la revendication 3, dans lequel
l'unité de commande (130) est configurée pour générer des informations pour présenter le plan d'attribution à recommander.

5. Dispositif selon une quelconque revendication précédente, dans lequel
l'unité de commande (130) est configurée pour acquérir un prix unitaire lorsque des données sont transmises dans la bande de fréquence prédéterminée.

6. Dispositif selon la revendication 5, dans lequel
le prix unitaire est décidé conformément à un contenu de données fournies par le premier service de communication ou conformément à un intervalle de temps durant lequel des données sont communiquées par le second service de communication.

7. Dispositif selon une quelconque revendication précédente, dans lequel
l'unité de commande (130) est configurée pour attribuer la ressource de communication sur la base d'une demande provenant d'un dispositif récepteur qui utilise le premier service de communication.

8. Dispositif selon la revendication 7, dans lequel
l'unité de commande (130) est configurée pour décider de transmettre des données par l'intermédiaire du premier service de communication au dispositif récepteur seulement dans le cas où le dispositif récepteur a un droit d'utiliser le premier service de communication ou dans le cas d'avoir un droit de transmettre les données fournies par le premier service de communication.

9. Dispositif selon une quelconque revendication précédente, dans lequel
l'unité de commande (130) est configurée pour additionner le nombre de situations de transmission de données fournies par le premier service de communication dans lesquelles des données sont transmises par le premier service de communication.

10. Dispositif selon une quelconque revendication précédente, dans lequel
l'unité de commande (130) est configurée pour commander une intensité de signal d'un signal utilisé pour transmettre des données par l'intermédiaire du second service de communication.

11. Dispositif selon une quelconque revendication précédente, dans lequel
l'unité de commande (130) est configurée pour attribuer une ressource de communication au premier service de communication et au second service de communication, dans chaque bande de fréquence.

12. Procédé d'un dispositif sans fil d'espace blanc, ledit procédé comprenant :
l'acquisition d'informations de demande actuelle et/ou future prédite et/ou d'informations de fourniture d'un premier service de communication de télévision numérique de diffusion qui utilise une bande de fréquence prédéterminée d'un espace blanc et d'informations de demande actuelle et/ou future prédite et/ou d'informations de fourniture d'un second service de communication qui, de façon secondaire, utilise la bande de fréquence prédéterminée de l'espace blanc ; et
l'attribution d'une ressource de communication de la bande de fréquence prédéterminée au premier service de communication et au second service de communication sur la base des informations de demande actuelle et/ou future prédite et/ou des informations de fourniture, et
la génération d'informations pour remplacer une partie de données transmises par le premier service de communication sur la base d'un résultat d'attribution de la ressource de communication avec des données de remplacement transmises par le premier service de communication.

13. Programme d'ordinateur comprenant des moyens codes de programme pour faire en sorte qu'un dispositif sans fil d'espace blanc selon la revendication 1 réalise les étapes du procédé selon la revendication 12 lorsque ledit programme d'ordinateur est réalisé sur le dispositif sans fil d'espace blanc.
